# EUROPEAN PATENT APPLICATION

(11) **EP 4 693 963 A1**
(43) Date of publication of application: **11.02.2026**
(21) Application number: 24795438.1
(22) Date of filing: 09.01.2024
(51) Int. Cl.: H04J 14/02

(54) **OPTICAL MULTIPLEXER MODULE, OPTICAL MULTIPLEXER/DEMULTIPLEXER MODULE, WAVELENGTH DIVISION MULTIPLEXING APPARATUS, AND SIGNAL TRANSMISSION METHOD**

(30) Priority: 28.04.2023 CN 202310491120
(71) Applicant: Huawei Technologies Co., Ltd., Shenzhen, Guangdong 518129 (CN)
(72) Inventor: XU, Yupeng, Shenzhen, Guangdong 518129 (CN); SONG, Jiajun, Shenzhen, Guangdong 518129 (CN); XIONG, Wei, Shenzhen, Guangdong 518129 (CN)
(74) Representative: Thun, Clemens
(86) International application number: PCT/CN2024/071246
(87) International publication number: WO 2024/222048

(57) **Abstract**

A multiplexer module, a multiplexer/demultiplexer module, a wavelength division multiplexing apparatus, and a signal transmission method are provided. The multiplexer module includes an optical coupling unit and an optical blocking unit. The optical coupling unit is configured to couple an optical signal input by a first device and an optical signal input by the optical blocking unit for output. The optical blocking unit is configured to receive an optical signal input by a client-side device, and when a set of all wavelengths included in the optical signal input by the first device does not include a wavelength of the optical signal input by the client-side device, send, to the optical coupling unit, the optical signal input by the client-side device. The multiplexer module does not limit a wavelength of an uplink service of the client-side device, and coupling is allowed only when an optical signal of the uplink service of the client-side device does not conflict with an existing optical signal, to avoid modification or replacement of the multiplexer/demultiplexer module when a service changes, and reduce difficulty in service adjustment.

## Description

This application claims priority to Chinese Patent Application No. 202310491120.5, filed with the China National Intellectual Property Administration on April 28, 2023 and entitled "MULTIPLEXER MODULE, MULTIPLEXER/DEMULTIPLEXER MODULE, WAVELENGTH DIVISION MULTIPLEXING APPARATUS, AND SIGNAL TRANSMISSION METHOD", which is incorporated herein by reference in its entirety.

### TECHNICAL FIELD

Embodiments of this application relate to the field of optical communication, and in particular, to a multiplexer module, a multiplexer/demultiplexer module, a wavelength division multiplexing apparatus, and a signal transmission method.

### BACKGROUND

With development of communication technologies, an optical communication system that uses light to transmit information is widely used in people's life.

In the optical communication system, a dense wavelength division multiplexing (dense wavelength division multiplexing, DWDM) technology is usually used to combine a group of optical wavelengths and an optical fiber is used for information transmission. A multiplexer/demultiplexer module is a passive module widely used in DWDM. The multiplexer/demultiplexer module is usually used at a client-side access site of the optical communication system, and performs power combination and separation on a transmitted optical signal, to implement functions of uplink and downlink scheduling of the optical signal at the client-side access site.

A conventional multiplexer/demultiplexer module can combine or separate only optical signals with fixed wavelengths. When a service changes, a wavelength of the optical signal also changes. In this case, the multiplexer/demultiplexer module needs to be modified or replaced, increasing difficulty in service adjustment.

### SUMMARY

Embodiments of this application provide a multiplexer module, to avoid modification or replacement of a multiplexer/demultiplexer module when a service changes, so as to reduce difficulty in service adjustment. Embodiments of this application further provide a corresponding multiplexer/demultiplexer module, a wavelength division multiplexing apparatus, a signal transmission method, and the like.

A first aspect of this application provides a multiplexer module. The multiplexer module includes an optical coupling unit and at least one optical blocking unit. The optical coupling unit is configured to couple a first optical signal and an optical signal that is input by the at least one optical blocking unit for output, where the first optical signal is an optical signal input by a first device into the multiplexer module. The at least one optical blocking unit is configured to receive an optical signal input by a client-side device, and when a first wavelength set does not include a wavelength of the optical signal input by the client-side device, send, to the optical coupling unit, the optical signal input by the client-side device, where the first wavelength set is a set of all wavelengths included in the first optical signal.

The optical coupling unit in this application is an optical fiber coupler, and the optical coupling unit is configured to couple a plurality of optical signals and then transmit the optical signals together, to implement optical signal combination. The optical blocking unit is an electric control attenuator or an optical switch.

In this application, the multiplexer module is used in an optical communication system, the first device is an optical communication device in the optical communication system, and the client-side device is an optical communication device at a client-side access site in the optical communication system. The first optical signal is an optical signal input into the multiplexer module after the optical signal sent by the first device is split by an optical splitter in the optical communication system. Alternatively, the first optical signal is an optical signal directly input by the first device into the multiplexer module.

In this application, the first optical signal carries downlink service information, the optical signal input by the client-side device carries uplink service information, and the multiplexer module implements a function of uplink scheduling of the optical signal that carries the service information.

In this application, when the first wavelength set does not include the wavelength of the optical signal input by the client-side device, it may be understood that the first optical signal does not conflict with the optical signal input by the client-side device. When the first wavelength set includes the wavelength of the optical signal input by the client-side device, it may be understood that the first optical signal conflicts with the optical signal input by the client-side device. The wavelength of the optical signal may also be replaced with a frequency of the optical signal, and all descriptions related to the wavelength may be replaced with the frequency.

The optical coupling unit and the optical blocking unit in this application are both integrated on a planar lightwave circuit chip.

According to the first aspect, the multiplexer module does not limit a wavelength of the uplink service of the client-side device, and coupling is allowed only when the optical signal of the uplink service of the client-side device does not conflict with an existing optical signal, to avoid modification or replacement of the multiplexer/demultiplexer module when a service changes, and reduce difficulty in service adjustment.

In a possible implementation of the first aspect, the multiplexer module includes N ports, each of the N ports is configured to receive the optical signal sent by the client-side device, a quantity of the at least one optical blocking unit is N, each of the N optical blocking units is connected to one of the N ports, and N is a positive integer greater than 0. The multiplexer module further includes: a detection unit, where the detection unit is configured to determine whether the optical signal input by the client-side device exists on a first port in the N ports; and a first blocking unit, configured to: when the optical signal input by the client-side device exists on the first port, determine whether the first wavelength set includes the wavelength of the optical signal input by the client-side device into the first port, where the first blocking unit is an optical blocking unit that is in the N optical blocking units and that is connected to the first port.

In this possible implementation, the detection unit is specifically an optical power detector or an optical power meter, and each optical blocking unit is connected to one port of the multiplexer module. The optical blocking unit determines whether a wavelength of an optical signal input by a corresponding port conflicts with a wavelength of a main optical path only when the detection unit detects the optical power or detects the optical signal, to improve implementability of the solution.

In a possible implementation of the first aspect, the first blocking unit is configured to control the optical signal input by the client-side device to be output to the detection unit through a first path by default, where the first path is an optical transmission path between the detection unit and the first port.

When the first blocking unit determines that the first wavelength set does not include the wavelength of the optical signal input by the client-side device into the first port, the first blocking unit is configured to control the optical signal input by the client-side device to be output to the optical coupling unit through a second path, where the second path is an optical transmission path between the optical coupling unit and the first port.

In this possible implementation, the optical blocking unit and the detection unit are integrated, and the detection unit and the optical blocking unit reuse a blocking structure. In this way, optical power of the optical signal input by the client-side device is prevented from being reduced, so that an insertion loss from an input port to an output port is reduced by 0.3 dB to 0.5 dB. In addition, an optical splitting unit used for detection is removed. A size of a waveguide chip is reduced, so that a size of an entire module is reduced, to implement miniaturization, and reduce difficulty of waveguide fabrication.

In a possible implementation of the first aspect, the multiplexer module further includes an optical splitting unit. The optical splitting unit is configured to split the optical signal input by the client-side device into the first port into a second optical signal and a third optical signal, send the second optical signal to the detection unit, and send the third optical signal to the first blocking unit. The first blocking unit is specifically configured to: when the detection unit detects the second optical signal, determine whether the first wavelength set includes a wavelength of the third optical signal, and when the first wavelength set does not include the wavelength of the third optical signal, send the third optical signal to the optical coupling unit.

In this possible implementation, the optical blocking unit and the detection unit are disposed independently of each other, to reduce module coupling difficulty and improve implementability of the solution.

In a possible implementation of the first aspect, the at least one optical blocking unit is further configured to: when the first wavelength set includes the wavelength of the optical signal input by the client-side device, block the optical signal input by the client-side device.

In this possible implementation, when the first wavelength set includes the wavelength of the optical signal input by the client-side device, the optical blocking unit further triggers an optical transform unit corresponding to the port, so that the optical transform unit changes a wavelength and then inputs the optical signal until the wavelength of the newly input optical signal does not conflict with all wavelengths of the first optical signal, so that implementability of the solution is improved.

In a possible implementation of the first aspect, the at least one optical blocking unit is a Mach-Zehnder interferometer MZI-type variable optical attenuator VOA or a micro-electro-mechanical system-type variable optical attenuator MEMS-VOA.

In this possible implementation, the VOA is used as the optical blocking unit to implement a capability of blocking and leveling optical signal power, so that implementability of the solution is improved.

A second aspect of this application provides a multiplexer/demultiplexer module. The multiplexer/demultiplexer module includes an optical splitting module and the multiplexer module in any one of the first aspect or the possible implementations of the first aspect. The optical splitting module is configured to split an optical signal input by a first device to obtain a first optical signal, and send the first optical signal to an optical coupling unit in the multiplexer module.

A third aspect of this application provides a wavelength division multiplexing apparatus. The wavelength division multiplexing apparatus includes the multiplexer/demultiplexer module in the second aspect.

A fourth aspect of this application provides a wavelength division multiplexing apparatus. The wavelength division multiplexing apparatus includes a multiplexer/demultiplexer module and a wavelength conversion module. The multiplexer/demultiplexer module includes an optical coupling unit and at least one optical blocking unit. The optical coupling unit is configured to couple a first optical signal and an optical signal that is input by the at least one optical blocking unit for output, where the first optical signal is an optical signal input by a first device into the multiplexer/demultiplexer module. The at least one optical blocking unit is configured to receive, by using the wavelength conversion module, an optical signal input by a client-side device, and when a first wavelength set does not include a wavelength of the optical signal input by the client-side device, send, to the optical coupling unit, the optical signal input by the client-side device, where the first wavelength set is a set of all wavelengths included in the first optical signal.

In a possible implementation of the fourth aspect, the multiplexer/demultiplexer module includes N ports, the wavelength conversion module includes N wavelength conversion units, a quantity of the at least one optical blocking unit is N, each of the N optical blocking units is connected to one of the N wavelength conversion units, each of the N wavelength conversion units is connected to one of the N ports, and N is a positive integer greater than 0. The wavelength division multiplexing apparatus further includes a wavelength detection module. A first conversion unit is configured to receive, through a first port in the N ports, the optical signal input by the client-side device, where the first conversion unit is a wavelength conversion unit that is in the N wavelength conversion units and that is connected to the first port. The first conversion unit is further adapted to configure the optical signal input by the client-side device into the first port as a fourth optical signal, and send the fourth optical signal to a first blocking unit, where the fourth optical signal is an optical signal with a preset wavelength, and the first blocking unit is an optical blocking unit that is in the N optical blocking units and that is connected to the first conversion unit. The first blocking unit is configured to send the fourth optical signal to the wavelength detection module. The first blocking unit is further configured to: when the wavelength detection module detects the fourth optical signal, receive, by using the first conversion unit, the optical signal input by the client-side device into the first port, and determine whether the first wavelength set includes the wavelength of the optical signal input by the client-side device into the first port.

In this possible implementation, the wavelength detection module and the wavelength conversion module that are originally disposed in the wavelength division multiplexing apparatus are used to remove the detection unit in the multiplexer module. In this way, a size of a waveguide chip is reduced, and difficulty of waveguide fabrication is reduced, so that a size of an entire wavelength division multiplexing apparatus is reduced, to implement miniaturization of the wavelength division multiplexing apparatus.

In a possible implementation of the fourth aspect, the first conversion unit is further configured to: when the wavelength detection module detects the fourth optical signal, configure the fourth optical signal as the optical signal input by the client-side device into the first port, and send, to the first blocking unit, the optical signal input by the client-side device into the first port.

In this possible implementation, the wavelength conversion module is specifically an optical transform unit. The wavelength conversion module is configured to reconfigure and input an optical signal after the wavelength detection module detects the optical signal, so that implementability of the solution is improved.

In a possible implementation of the fourth aspect, the at least one optical blocking unit is further configured to: when the first wavelength set includes the wavelength of the optical signal input by the client-side device, block the optical signal input by the client-side device.

In a possible implementation of the fourth aspect, the at least one optical blocking unit is a Mach-Zehnder interferometer MZI-type variable optical attenuator VOA or a micro-electro-mechanical system-type variable optical attenuator MEMS-VOA.

A fifth aspect of this application provides a signal transmission method. The method includes: determining whether an optical signal input by a client-side device into a first port exists on the first port of a multiplexer module; if the optical signal input by the client-side device into the first port exists on the first port, determining whether a first wavelength set includes a wavelength of the optical signal input by the client-side device into the first port, where the first wavelength set is a set of all wavelengths included in a first optical signal, and the first optical signal is an optical signal input by a first device into the multiplexer module; and
if the first wavelength set does not include the wavelength of the optical signal input by the client-side device into the first port, coupling the first optical signal and the optical signal that is input by the client-side device into the first port for output.

A sixth aspect of this application provides a signal transmission method. The method includes: determining whether a fourth optical signal exists on a first port of a multiplexer/demultiplexer module, where the fourth optical signal is an optical signal with a preset wavelength; if the fourth optical signal exists on the first port, configuring the fourth optical signal as an optical signal input by a client-side device into the first port, and determining whether a first wavelength set includes a wavelength of the optical signal input by the client-side device into the first port, where the first wavelength set is a set of all wavelengths included in a first optical signal, and the first optical signal is an optical signal input by a first device into the multiplexer/demultiplexer module; and if the first wavelength set does not include the wavelength of the optical signal input by the client-side device into the first port, coupling the first optical signal and the optical signal that is input by the client-side device into the first port for output.

In embodiments of this application, the multiplexer module includes the optical coupling unit and the optical blocking unit. The optical coupling unit is configured to couple the optical signal input by the first device and the optical signal input by the optical blocking unit and then output the coupled optical signal. The optical blocking unit is configured to receive the optical signal input by the client-side device, and send, to the optical coupling unit, the optical signal input by the client-side device when the set of all wavelengths included in the optical signal input by the first device does not include the wavelength of the optical signal input by the client-side device. The multiplexer module does not limit the wavelength of the uplink service of the client-side device, and the coupling is allowed only when the optical signal of the uplink service of the client-side device does not conflict with the existing optical signal, to avoid modification or replacement of the multiplexer/demultiplexer module when the service changes, and reduce the difficulty in the service adjustment.

### BRIEF DESCRIPTION OF DRAWINGS

FIG. 1 is a diagram of an architecture of an optical communication system;
FIG. 2 is a diagram of an embodiment of a multiplexer module according to an embodiment of this application;
FIG. 3 is a diagram of another embodiment of a multiplexer module according to an embodiment of this application;
FIG. 4 is a diagram of another embodiment of a multiplexer module according to an embodiment of this application;
FIG. 5 is a diagram of an embodiment of a detection unit and an optical blocking unit according to an embodiment of this application;
FIG. 6 is a diagram of another embodiment of a detection unit and an optical blocking unit according to an embodiment of this application;
FIG. 7 is a diagram of an embodiment of a multiplexer/demultiplexer module according to an embodiment of this application;
FIG. 8 is a diagram of an embodiment of a wavelength division multiplexing apparatus according to an embodiment of this application;
FIG. 9 is a diagram of an embodiment of a signal transmission method according to an embodiment of this application;
FIG. 10 is a diagram of another embodiment of a wavelength division multiplexing apparatus according to an embodiment of this application;
FIG. 11 is a diagram of another embodiment of a wavelength division multiplexing apparatus according to an embodiment of this application; and
FIG. 12 is a diagram of another embodiment of a signal transmission method according to an embodiment of this application.

### DESCRIPTION OF EMBODIMENTS

The following describes embodiments of this application with reference to the accompanying drawings. It is clear that described embodiments are merely some embodiments rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data used in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, manners, elements, and circuits that are well-known to a person skilled in the art are not described in detail, so that a subject matter of this application is highlighted.

The following uses an example to describe an application scenario related to embodiments of this application.

In an optical communication system, a dense wavelength division multiplexing (dense wavelength division multiplexing, DWDM) technology is usually used to combine a group of optical wavelengths and an optical fiber is used for information transmission in the optical communication system. A multiplexer/demultiplexer module is a passive module widely used in DWDM. The multiplexer/demultiplexer module is usually used at a client-side access site of the optical communication system, and the multiplexer/demultiplexer module performs power combination and separation on a transmitted optical signal at a location of the client-side access site, so that the multiplexer/demultiplexer module implements functions of uplink and downlink scheduling of the optical signal at the client-side access site.

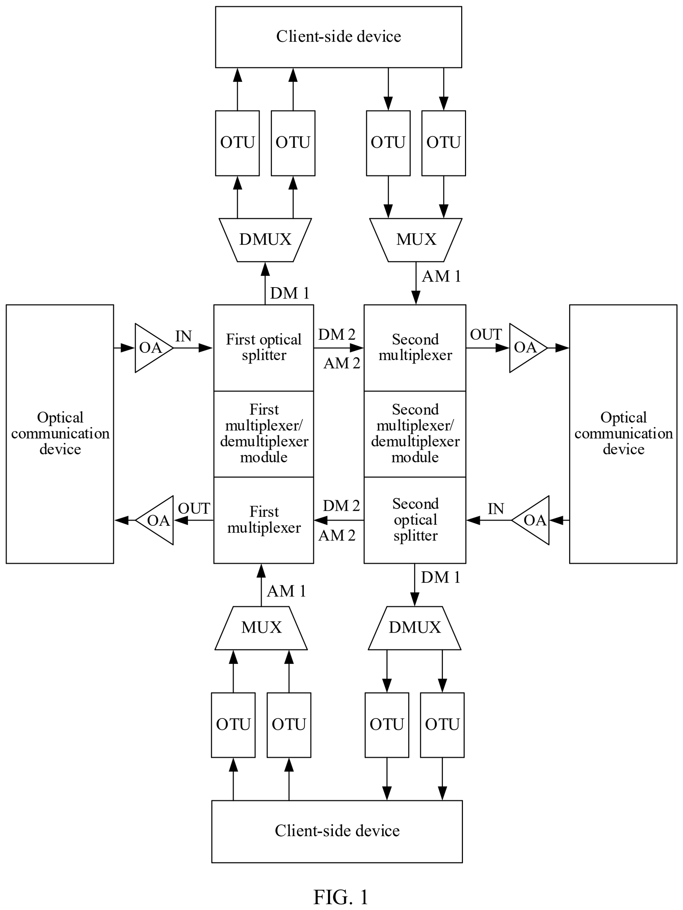

In an optical communication system shown in FIG. 1, two optical communication devices transmit information to each other through two optical fibers, and transmission optical paths of the optical fibers between the two optical communication devices are understood as main optical paths. On the main optical path, during transmission, there are a plurality of client-side access sites, and a client-side device in the client-side access site sends an optical signal that carries uplink service information to the main optical path, and receives an optical signal that carries downlink service information and that is sent by the main optical path. In this case, a multiplexer/demultiplexer module needs to be disposed on the main optical path at a position corresponding to the client-side device, to implement functions of uplink and downlink scheduling of an optical signal that carries service information.

The multiplexer/demultiplexer module includes an optical splitter and a multiplexer. The optical splitter is configured to receive an optical signal on the main optical path, and split the optical signal on the main optical path. After the optical signal is split, a part of the optical signal on the main optical path continues to be transmitted to the multiplexer along the main optical path, and another part of the optical signal (carrying downlink service information) on the main optical path is transmitted to the client-side device through the optical fiber. The multiplexer is configured to receive, through the optical fiber, an optical signal (carrying uplink service information) sent by the client-side device, and the multiplexer is further configured to receive the optical signal on the main optical path, and couple the optical signal sent by the client-side device and the optical signal on the main optical path. An optical signal coupled by the multiplexer continues to be transmitted along the main optical path.

For example, in a direction from left to right in FIG. 1, after passing through an optical amplifier (optical amplifier, OA), an optical signal on the main optical path is sent as an input optical signal (IN) to a first optical splitter in a first multiplexer/demultiplexer module. The first optical splitter splits the optical signal into two optical signals: a drop multiplexer 1 (DM 1) and a drop multiplexer 2 (DM 2). The first optical splitter sends the DM 1 to a demultiplexer (DMUX). The DMUX is configured to decompose a multiplexed optical signal of the DM 1 into single-wavelength optical signals, and send the single-wavelength optical signals to respective corresponding optical transform units (optical transform units, OTUs). The OTU sends the single-wavelength optical signal to the client-side device after completing configuration on the single-wavelength optical signal, to implement a function of downlink scheduling of the client-side device. The DM 2 continues to pass through the main optical path, and is sent as an add multiplexer 2 (AM 2) to a second multiplexer in a second multiplexer/demultiplexer module. In this case, the second multiplexer further receives an optical signal, that is, an add multiplexer 1 (AM 1), obtained through multiplexing by the client-side device by using a plurality of OTUs and multiplexers (MUXs). The second multiplexer couples the AM 1 and the AM 2 to obtain an output optical signal (OUT), and the output optical signal continues to be transmitted along the main optical path after passing through the OA.

It should be understood that a process for a main optical path in a direction from right to left in FIG. 1 is the same as the foregoing process with only an opposite transmission direction of the main optical path. Optionally, on the main optical path, during transmission, there are a plurality of client-side devices that send an optical signal that carries uplink service information and receive an optical signal that carries downlink service information. Therefore, there are a plurality of multiplexer/demultiplexer modules.

To implement functions of uplink and downlink scheduling of each client-side device, the multiplexer/demultiplexer module needs to have a wavelength selection function, to avoid a conflict between a wavelength of the optical signal sent by the client-side device and a wavelength of the optical signal on the main optical path. For example, a wavelength division multiplexing (wavelength division multiplexing, WDM) filter is used to select wavelengths that need to be separated and combined. However, a multiplexer/demultiplexer module using a WDM filter can only combine or separate optical signals with fixed wavelengths, and the WDM filter does not have a port extension capability. Therefore, a new port cannot be directly added to the WDM filter to be provided for optical signals with other wavelengths. When a service changes, a wavelength of the optical signal also changes. In this case, the multiplexer/demultiplexer module needs to be modified or replaced. This increases difficulty in service adjustment.

In view of this, embodiments of this application provide a multiplexer module, to avoid modification or replacement of the multiplexer/demultiplexer module when a service changes, so as to reduce difficulty in service adjustment. Embodiments of this application further provide a corresponding multiplexer/demultiplexer module, a wavelength division multiplexing apparatus, a signal transmission method, and the like. Details are separately described in the following.

The following describes, with reference to the foregoing application scenario, the multiplexer module, the multiplexer/demultiplexer module, the wavelength division multiplexing apparatus, and the signal transmission method that are provided in embodiments of this application.

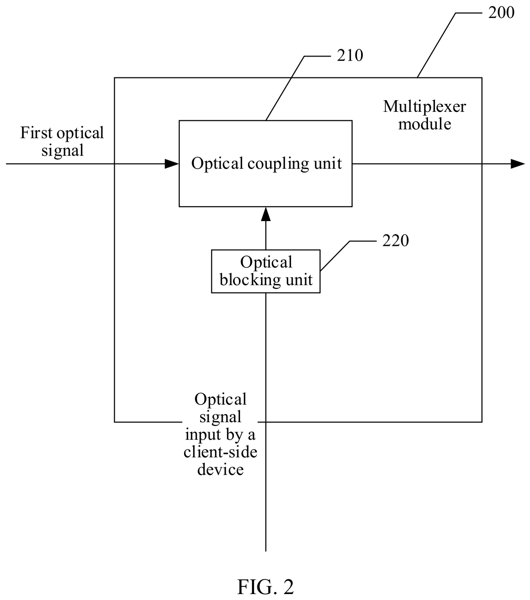

FIG. 2 is a diagram of a structure of a multiplexer module according to an embodiment of this application. As shown in FIG. 2, the multiplexer module 200 provided in this embodiment of this application includes an optical coupling unit 210 and at least one optical blocking unit 220.

The optical coupling unit 210 is configured to couple a first optical signal and an optical signal that is input by the at least one optical blocking unit 220 for output, where the first optical signal is an optical signal input by a first device into the multiplexer module 200. The at least one optical blocking unit 220 is configured to receive an optical signal input by a client-side device, and when a first wavelength set does not include a wavelength of the optical signal input by the client-side device, send, to the optical coupling unit 210, the optical signal input by the client-side device, where the first wavelength set is a set of all wavelengths included in the first optical signal.

Optionally, the first device in the embodiment related to FIG. 2 is the optical communication device in the optical communication system shown in FIG. 1. The client-side device is the client-side device in the client-side access site in the optical communication system shown in FIG. 1. The multiplexer module 200 is the multiplexer in the multiplexer/demultiplexer module in the optical communication system shown in FIG. 1. The first optical signal is the optical signal input by the first device into the multiplexer module 200, and the first optical signal may also be understood as the optical signal on the main optical path. Optionally, the first optical signal is an optical signal input into the multiplexer module 200 after the optical signal sent by the first device is split by the optical splitter in the optical communication system. Alternatively, the first optical signal is an optical signal directly input by the first device into the multiplexer module 200.

Specifically, the optical coupling unit 210 is an optical fiber coupler (optical fiber coupler), and the optical coupling unit 210 is configured to couple a plurality of optical signals and then transmit the optical signals together. The optical coupling unit 210 is configured to implement optical signal combination. For example, in this embodiment of this application, the optical coupling unit 210 is configured to couple the first optical signal and the optical signal that is input by the at least one optical blocking unit 220 for output. The at least one optical blocking unit 220 is an electric control attenuator or an optical switch. Optionally, the electric control attenuator is specifically a Mach-Zehnder interferometer (Mach-Zehnder interferometer, MZI)-type variable optical attenuator (variable optical attenuator, VOA) or a micro-electro-mechanical system (Micro-Electro-Mechanical System, MEMS)-type variable optical attenuator, that is, an MEMS-VOA. The VOA is used as the optical blocking unit 220 to implement blocking and leveling capabilities of optical signal power. In this embodiment of this application, an example in which the optical blocking unit 220 is the MZI-type VOA (referred to as MZI for short below) is used for description.

An example in which a quantity of the at least one optical blocking unit 220 is 1, and the first optical signal is the optical signal directly input by the first device into the multiplexer module 200 is used for description. The optical blocking unit 220 blocks, by default, the optical signal input by the client-side device, in other words, the optical blocking unit 220 blocks, by default, the optical signal input by the client-side device from being transmitted to the optical coupling unit 210. When the optical signal input by the client-side device is transmitted to the optical blocking unit 220, the optical blocking unit 220 determines whether a set of all wavelengths included in the first optical signal, in other words, the first wavelength set, includes the wavelength of the optical signal input by the client-side device.

Specifically, the optical blocking unit 220 is configured to compare the wavelength of the optical signal input by the client-side device with all wavelengths in the first wavelength set. If a wavelength that is the same as the wavelength of the optical signal input by the client-side device exists in the first wavelength set, the optical blocking unit 220 determines that the first wavelength set includes the wavelength of the optical signal input by the client-side device. In other words, the optical signal input by the client-side device conflicts with the optical signal input by the first device into the multiplexer module 200. In this case, the optical blocking unit 220 maintains a default state, and blocks the optical signal input by the client-side device from being transmitted to the optical coupling unit 210.

If a wavelength that is the same as the wavelength of the optical signal input by the client-side device does not exist in the first wavelength set, the optical blocking unit 220 determines that the first wavelength set does not include the wavelength of the optical signal input by the client-side device. In other words, the optical signal input by the client-side device does not conflict with the optical signal input by the first device into the multiplexer module 200. In this case, the optical blocking unit 220 cancels a default state, and transmits, to the optical coupling unit 210, the optical signal input by the client-side device. In this case, the optical coupling unit 210 couples the first optical signal and the optical signal that is input by the at least one optical blocking unit 220 for output, to complete a function of uplink scheduling of the optical signal on the client-side device.

It should be understood that the wavelength of the optical signal may also be replaced with a frequency of the optical signal, and all descriptions related to the wavelength in this embodiment of this application may be replaced with the frequency.

Optionally, when a wavelength that is the same as the wavelength of the optical signal input by the client-side device exists in the first wavelength set, the optical blocking unit 220 is further configured to trigger a corresponding OTU. The optical blocking unit 220 enables the OTU to change or reconfigure the wavelength of the optical signal input by the client-side device until the wavelength of the optical signal input by the client-side device does not conflict with all wavelengths included in the first optical signal. In this case, the optical blocking unit 220 sends, to the optical coupling unit 210, the optical signal input by the client-side device.

It should be understood that a wavelength range of the optical signal is not limited in this embodiment of this application. For example, the wavelength of the first optical signal and the wavelength of the optical signal input by the client-side device are wavelengths of a C band (1530 nm to 1565 nm), an L band (1565 nm to 1625 nm), or another band.

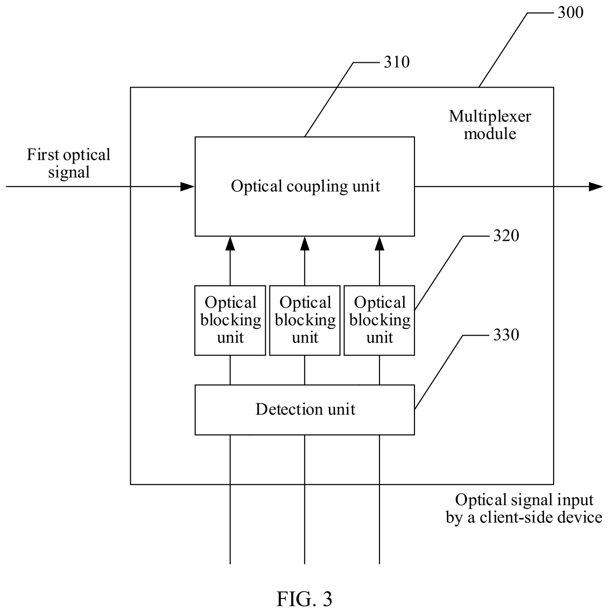

FIG. 3 is a diagram of a structure of another multiplexer module according to an embodiment of this application. As shown in FIG. 3, the multiplexer module 300 provided in this embodiment of this application includes an optical coupling unit 310, at least one optical blocking unit 320, and a detection unit 330.

The multiplexer module 300 includes N ports, and each of the N ports is configured to receive an optical signal sent by a client-side device. A quantity of the at least one optical blocking unit 320 is N, and each of the N optical blocking units 320 is connected to one of the N ports, where N is a positive integer greater than 0.

The detection unit 330 is configured to determine whether the optical signal input by the client-side device exists on a first port in the N ports. A first blocking unit is configured to: when the optical signal input by the client-side device exists on the first port, determine whether a first wavelength set includes a wavelength of the optical signal input by the client-side device into the first port.

Specifically, the detection unit 330 is specifically an optical power detector (power detector, PD) or an optical power meter (optical power meter, OPM). In this embodiment of this application, an example in which the detection unit 330 is the PD is used for description. Each optical blocking unit 320 is connected to one port, the first port is any one of the N ports, and the first blocking unit is an optical blocking unit 320 that is in the N optical blocking units 320 and that is connected to the first port.

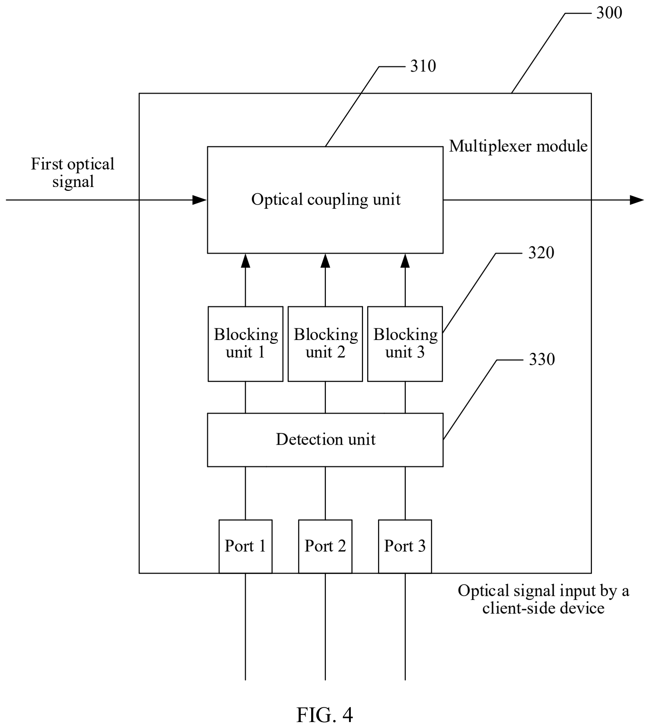

For example, as shown in FIG. 4, when N=3, the multiplexer module 300 includes three ports: a port 1, a port 2, and a port 3, and the detection unit 330 sequentially detects whether there is optical power on the port 1, the port 2, and the port 3. For example, when the detection unit 330 detects that there is optical power on the port 1, the port 1 is the first port. In this case, a blocking unit 1 corresponding to (connected to) the port 1 is the first blocking unit. The blocking unit 1 compares a wavelength of an optical signal input by the client-side device into the port 1 with all wavelengths in the first wavelength set. If the blocking unit 1 determines that the first wavelength set does not include the wavelength of the optical signal input by the client-side device into the port 1, the blocking unit 1 disables a blocking state of the port 1. In this case, the blocking unit 1 sends, to the optical coupling unit 310, the optical signal input by the client-side device into the port 1, so that the optical coupling unit 310 couples the first optical signal and the optical signal that is input by the client-side device into the port 1.

The detection unit 330 continues to perform detection on the port 2. If the detection unit 330 detects that there is no optical power on the port 2, a blocking unit 2 corresponding to the port 2 maintains a blocking state. The detection unit 330 continues to perform detection on the port 3. When the detection unit 330 detects that there is optical power on the port 3, the port 3 is the first port, and a blocking unit 3 corresponding to the port 3 is the first blocking unit. The blocking unit 3 compares a wavelength of an optical signal input by the client-side device into the port 3 with all wavelengths in the first wavelength set. If the blocking unit 3 determines that the first wavelength set includes the wavelength of the optical signal input by the client-side device into the port 3, the blocking unit 3 maintains a blocking state, to block the optical signal input by the client-side device into the port 3 from being transmitted to the optical coupling unit 310.

It should be understood that when N is greater than or equal to 2, the N optical blocking units 320 are coupled into one optical blocking unit array. Optionally, there are also N detection units 330. Each of the N detection units 330 is connected to one of the N optical blocking units 320. Each of the N detection units 330 is connected to one of the N ports. The N detection units 330 are coupled into one detection unit array.

Optionally, the detection unit and the optical blocking unit are integrated together or independent of each other, which are separately described in the following.

### 1. Independence solution

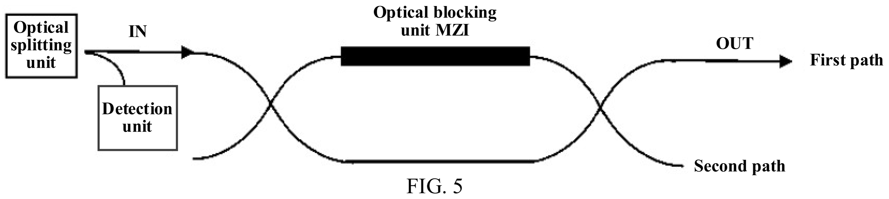

As shown in FIG. 5, when the detection unit and the optical blocking unit are disposed independently of each other, the multiplexer module further includes an optical splitting unit. For example, the detection unit is a PD, and the optical blocking unit is an MZI. The optical splitting unit is configured to split the optical signal input by the client-side device into the first port into a second optical signal and a third optical signal. The optical splitting unit is further configured to send the second optical signal to the detection unit, and send the third optical signal to the first blocking unit. The first blocking unit is specifically configured to: when the detection unit detects the second optical signal, determine whether the first wavelength set includes a wavelength of the third optical signal. The first blocking unit is further configured to: when the first wavelength set does not include the wavelength of the third optical signal, send the third optical signal to the optical coupling unit. In this case, the optical coupling unit is configured to couple the first optical signal and the third optical signal that is input by the first blocking unit for output.

Specifically, after the optical signal input by the client-side device into the first port enters the multiplexer module from the first port, the optical splitting unit first splits 5% optical power of the optical signal, to obtain the second optical signal. Optionally, the optical splitting unit is a planar lightwave circuit (planar lightwave circuit, PLC) splitter. The optical splitting unit sends the second optical signal to the detection unit for detection, and the optical splitting unit sends remaining 95% optical power (the third optical signal) to the first blocking unit through an input port (IN).

When the detection unit detects the second optical signal, the detection unit determines that the optical signal input by the client-side device exists on the first port. In this case, the first blocking unit determines whether the third optical signal conflicts with the first optical signal. If the first blocking unit determines that the first wavelength set does not include the wavelength of the third optical signal, the first blocking unit controls the third optical signal to be output from an output port (OUT) to the optical coupling unit through a first path. When the detection unit detects no second optical signal, and the first blocking unit determines that the third optical signal conflicts with the first optical signal or is in a default state, the first blocking unit maintains a blocking state. For example, the first blocking unit controls the optical signal input by the client-side device into the first port to be output through a second path.

### 2. Integration solution

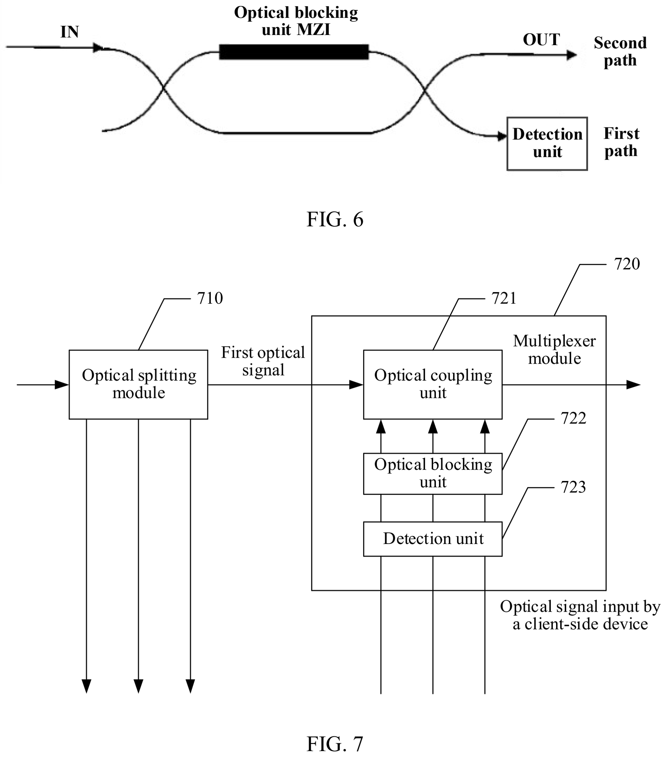

As shown in FIG. 6, when the detection unit and the optical blocking unit are integrated, the detection unit and the optical blocking unit are integrated on one PLC chip. For example, the detection unit is a PD, and the optical blocking unit is an MZI. The first blocking unit is configured to control the optical signal input by the client-side device to be output to the detection unit through a first path by default. The first path is an optical transmission path between the detection unit and the first port. When the first blocking unit determines that the first wavelength set does not include the wavelength of the optical signal input by the client-side device into the first port, the first blocking unit is configured to control the optical signal input by the client-side device to be output to the optical coupling unit through a second path. The second path is an optical transmission path between the optical coupling unit and the first port.

In a default state, after the optical signal input by the client-side device into the first port enters an input port (IN), the optical signal is output from the first path, and an output port (OUT) of the second path is configured to output the optical signal to the optical coupling unit. Therefore, in the default state, there is no optical signal on the output port and the output port is blocked. After a location of a detection interface of the detection unit is set on a port of the second path, whether the optical signal input by the client-side device exists on the first port can be detected in the default state, in addition, the detection unit multiplexes one MZI with the optical blocking unit. In this integration solution, optical power of the optical signal input by the client-side device into the first port is prevented from being reduced, so that an insertion loss from the input port to the output port is reduced by 0.3 dB to 0.5 dB. In addition, in the integration solution, an optical splitting unit is removed. A size of a waveguide chip is reduced, so that a size of the entire multiplexer module is reduced, to implement miniaturization, and reduce difficulty of waveguide fabrication.

When the detection unit detects a second optical signal, the detection unit determines that the optical signal input by the client-side device exists on the first port. In this case, the first blocking unit determines whether the optical signal input by the client-side device into the first port conflicts with the first optical signal. If the first blocking unit determines that the first wavelength set does not include the wavelength of the optical signal input by the client-side device into the first port, the first blocking unit controls the optical signal input by the client-side device into the first port to pass through the first path. In this case, the optical signal input by the client-side device into the first port is output from the output port (OUT) to the optical coupling unit. When the detection unit detects no optical signal input by the client-side device into the first port, and the first blocking unit determines that the optical signal input by the client-side device into the first port conflicts with the first optical signal or is in a default state, the first blocking unit maintains a blocking state. For example, the first blocking unit controls the optical signal input by the client-side device into the first port to be output to the detection unit through the second path.

In this embodiment of this application, the optical coupling unit, the detection unit, and the optical blocking unit are all integrated on one PLC chip.

In this embodiment of this application, the multiplexer module includes the optical coupling unit and the optical blocking unit. The optical coupling unit is configured to couple an optical signal input by a first device and an optical signal input by the optical blocking unit for output. The optical blocking unit is configured to receive an optical signal input by the client-side device, and when a set of all wavelengths included in the optical signal input by the first device does not include a wavelength of the optical signal input by the client-side device, send, to the optical coupling unit, the optical signal input by the client-side device. The multiplexer module does not limit a wavelength of an uplink service of the client-side device, and coupling is allowed only when an optical signal of the uplink service of the client-side device does not conflict with an existing optical signal, to avoid modification or replacement of the multiplexer/demultiplexer module when a service changes, and reduce difficulty in service adjustment.

FIG. 7 is a diagram of a structure of a multiplexer/demultiplexer module according to an embodiment of this application. As shown in FIG. 7, the multiplexer/demultiplexer module provided in this embodiment of this application includes an optical splitting module 710 and a multiplexer module 720. Optionally, the multiplexer module 720 in the embodiment related to FIG. 7 is the multiplexer module described in any one of embodiments in FIG. 2 to FIG. 6, and the optical splitting module 710 in the embodiment related to FIG. 7 is the optical splitter shown in FIG. 1.

The optical splitting module 710 is configured to separate an optical signal based on different power ratios. Specifically, the optical splitting module 710 is configured to split an optical signal input by a first device to obtain a first optical signal, and send the first optical signal to an optical coupling unit 721 in the multiplexer module 720.

The multiplexer module 720 includes the optical coupling unit 721, at least one optical blocking unit 722, and a detection unit 723. The optical blocking unit 722 and the detection unit 723 are disposed independently or are integrated.

It should be understood that the multiplexer/demultiplexer module may be configured to process different main optical paths. For example, the optical splitting module in the multiplexer/demultiplexer module is configured to send, to a client-side device, an optical signal that carries downlink service information and that is on one main optical path. The multiplexer module in the multiplexer/demultiplexer module is configured to receive an optical signal that carries uplink service information and that is sent by the client-side device, couple the optical signal that carries the uplink service information and that is sent by the client-side device and an optical signal on another main optical path for output.

Optionally, both the optical splitting module and the multiplexer module are integrated on one PLC chip.

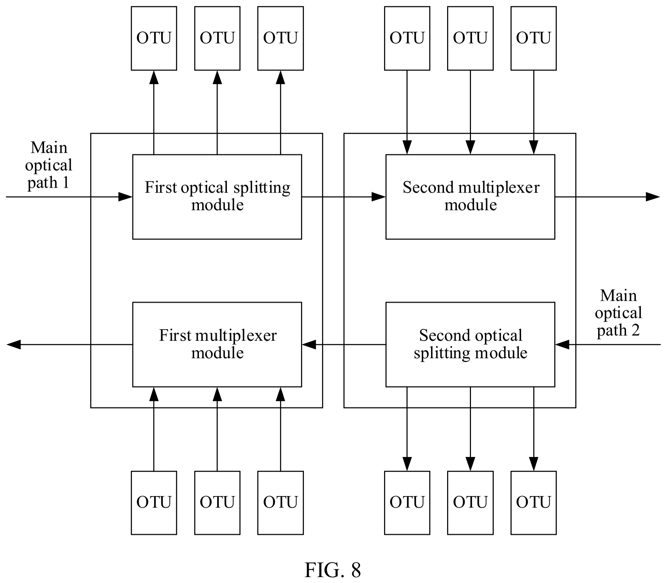

FIG. 8 is a diagram of a structure of a wavelength division multiplexing apparatus according to an embodiment of this application. As shown in FIG. 8, the wavelength division multiplexing apparatus provided in this embodiment of this application includes a multiplexer/demultiplexer module.

Optionally, the wavelength division multiplexing apparatus in the embodiment related to FIG. 8 corresponds to related modules such as the multiplexer/demultiplexer module and the OTU in the optical communication system shown in FIG. 1 (excluding the optical communication device and the client-side device in FIG. 1). A difference lies only in that a first multiplexer module and a second multiplexer module in the embodiment related to FIG. 8 are the multiplexer modules described in any one of embodiments in FIG. 2 to FIG. 6. Alternatively, the multiplexer/demultiplexer module in the wavelength division multiplexing apparatus is specifically the multiplexer/demultiplexer module shown in FIG. 7.

For example, the wavelength division multiplexing apparatus includes a first multiplexer/demultiplexer module and a second multiplexer/demultiplexer module. The first multiplexer/demultiplexer module includes a first optical splitting module and the first multiplexer module, and the second multiplexer/demultiplexer module includes a second optical splitting module and the second multiplexer module. An optical signal on a main optical path 1 is transmitted from the first optical splitting module to the second multiplexer module and then is output, and an optical signal on a main optical path 2 is transmitted from the second optical splitting module to the first multiplexer module and then is output. Both the first multiplexer module and the second multiplexer module are the multiplexer modules described in any one of embodiments in FIG. 2 to FIG. 6.

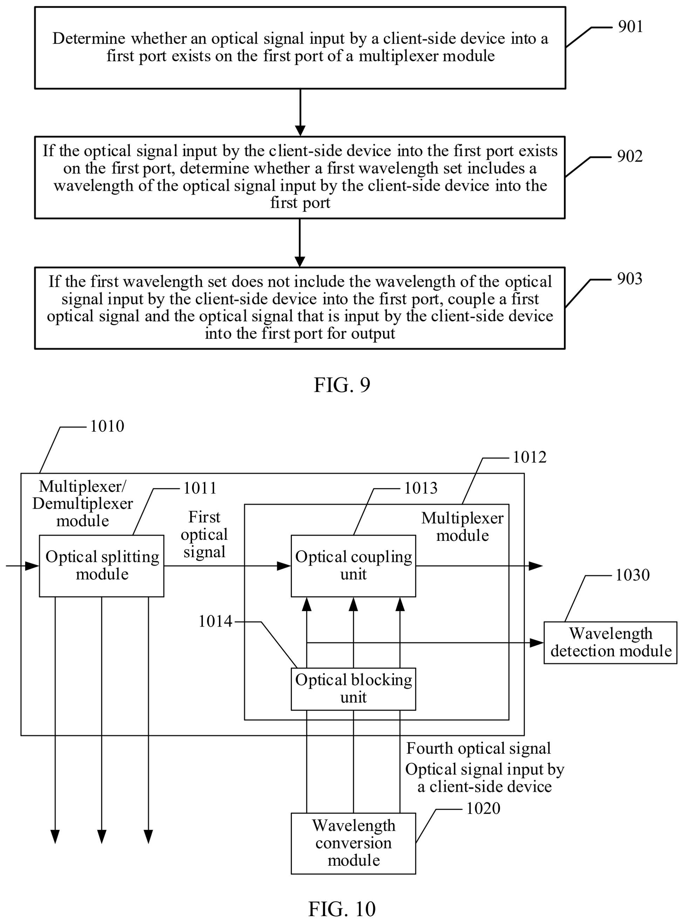

FIG. 9 is a schematic flowchart of a signal transmission method according to an embodiment of this application. As shown in FIG. 9, the signal transmission method provided in this embodiment of this application includes step 901 to step 903.

901: Determine whether an optical signal input by a client-side device into a first port exists on the first port of a multiplexer module.

For example, the signal transmission method is applied to the multiplexer module shown in any one of embodiments in FIG. 2 to FIG. 6, the multiplexer/demultiplexer module shown in FIG. 7, and the wavelength division multiplexing apparatus shown in FIG. 8.

A default state of a first blocking unit in the multiplexer module is set to a blocking state. The client-side device sends, from the first port of the multiplexer module through an OTU, an optical signal that carries service information to a detection unit in the multiplexer module. After the detection unit detects optical power of the optical signal input by the client-side device into the first port, the detection unit determines that the optical signal input by the client-side device into the first port exists on the first port.

902: If the optical signal input by the client-side device into the first port exists on the first port, determine whether a first wavelength set includes a wavelength of the optical signal input by the client-side device into the first port.

903: If the first wavelength set does not include the wavelength of the optical signal input by the client-side device into the first port, couple a first optical signal and the optical signal that is input by the client-side device into the first port for output.

The first wavelength set is a set of all wavelengths included in the first optical signal, the first optical signal is an optical signal input by a first device into the multiplexer module, and the first port is connected to the first blocking unit.

After the detection unit determines that the optical signal input by the client-side device into the first port exists on the first port, the first blocking unit in the multiplexer module compares the optical signal input by the client-side device into the first port with the first wavelength set.

If a wavelength that is the same as the wavelength of the optical signal input by the client-side device into the first port does not exist in the first wavelength set, the first blocking unit determines that the first wavelength set does not include the wavelength of the optical signal input by the client-side device into the first port. In other words, the optical signal input by the client-side device into the first port does not conflict with the optical signal input by the first device into the multiplexer module. In this case, the first blocking unit cancels the default blocking state, and transmits, to the optical coupling unit, the optical signal input by the client-side device into the first port. The optical coupling unit couples the first optical signal and the optical signal that is input by the first blocking unit for output, to complete a function of uplink scheduling of the optical signal on the client-side device.

If a wavelength that is the same as the wavelength of the optical signal input by the client-side device into the first port exists in the first wavelength set, the first blocking unit determines that the first wavelength set includes the wavelength of the optical signal input by the client-side device into the first port. In other words, the optical signal input by the client-side device into the first port conflicts with the optical signal input by the first device into the multiplexer module. In this case, the first blocking unit maintains the default blocking state, triggers the OTU connected to the first port to change a wavelength, and then performs sending and determining again until the client-side device completes transmission of the optical signal that carries the uplink service information.

It should be understood that for a specific embodiment manner of the signal transmission method provided in this embodiment of this application, refer to corresponding descriptions of the multiplexer module shown in any one of embodiments in FIG. 2 to FIG. 6, the multiplexer/demultiplexer module shown in FIG. 7, and the wavelength division multiplexing apparatus shown in FIG. 8 in the foregoing embodiments. Details are not described in this embodiment of this application again.

FIG. 10 is a diagram of a structure of a wavelength division multiplexing apparatus according to an embodiment of this application. As shown in FIG. 10, the wavelength division multiplexing apparatus provided in this embodiment of this application includes a multiplexer/demultiplexer module 1010, a wavelength conversion module 1020, and a wavelength detection module 1030. The multiplexer/demultiplexer module 1010 includes an optical splitting module 1011 and a multiplexer module 1012. The multiplexer module 1012 includes an optical coupling unit 1013 and at least one optical blocking unit 1014.

Optionally, the at least one optical blocking unit 1014 is an MZI-type VOA or an MEMS-VOA, and the wavelength conversion module 1020 is an OTU. The wavelength division multiplexing apparatus in the embodiment related to FIG. 10 corresponds to the wavelength division multiplexing apparatus shown in FIG. 8. A difference lies only in that no detection unit is disposed in the wavelength division multiplexing apparatus in the embodiment related to FIG. 10, and a function of the detection unit is jointly implemented by the wavelength conversion module 1020 and the wavelength detection module 1030 in the wavelength division multiplexing apparatus. For other specific implementations of the wavelength division multiplexing apparatus in the embodiment related to FIG. 8, refer to the foregoing corresponding descriptions of the wavelength division multiplexing apparatus shown in FIG. 8. Details are not described herein again in this embodiment of this application.

The optical coupling unit 1013 is configured to couple a first optical signal and an optical signal that is input by the at least one optical blocking unit 1014 for output. The first optical signal is an optical signal input by a first device into the multiplexer/demultiplexer module 1010. The at least one optical blocking unit 1014 is configured to receive, by using the wavelength conversion module 1020, an optical signal input by a client-side device. The at least one optical blocking unit 1014 is further configured to: when a first wavelength set does not include a wavelength of the optical signal input by the client-side device, send, to the optical coupling unit 1013, the optical signal input by the client-side device. The first wavelength set is a set of all wavelengths included in the first optical signal. The at least one optical blocking unit 1014 is further configured to: when the first wavelength set includes the wavelength of the optical signal input by the client-side device, block the optical signal input by the client-side device.

It should be understood that a location of the wavelength detection module 1030 in FIG. 10 is merely used for illustration. A location and a connection relationship of the wavelength detection module 1030 in different wavelength division multiplexing apparatuses may change. This is not limited in this embodiment of this application.

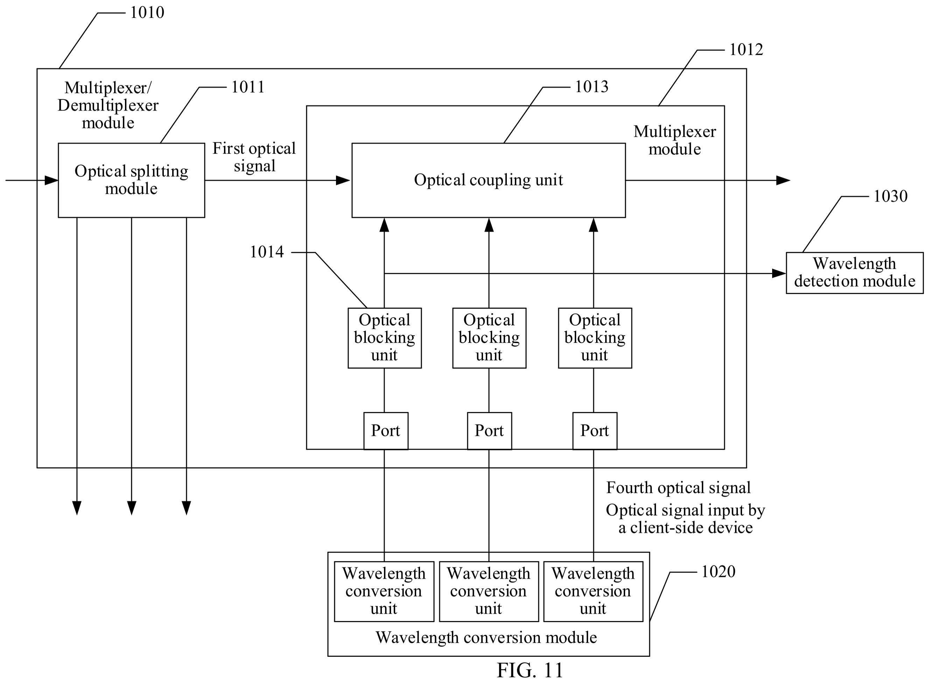

Specifically, as shown in FIG. 11, the multiplexer/demultiplexer module 1010 includes N ports, the wavelength conversion module 1020 includes N wavelength conversion units, and a quantity of the at least one optical blocking unit 1014 is N. Each of the N optical blocking units 1014 is connected to one of the N wavelength conversion units. Each of the N wavelength conversion units is connected to one of the N ports, where N is a positive integer greater than 0. In other words, each optical blocking unit 1014 is connected to one wavelength conversion unit, and each wavelength conversion unit is connected to one port. Specifically, a first blocking unit is connected to a first conversion unit through a first port, that is, the first blocking unit is connected to the first port, and the first conversion unit is also connected to the first port. The first blocking unit is any one of the at least one optical blocking unit 1014. The first conversion unit is any wavelength conversion unit in the wavelength conversion module 1020. The first port is any one of the N ports, and the N ports are specifically on the multiplexer module in the multiplexer/demultiplexer module.

The first conversion unit is configured to receive, through the first port in the N ports, the optical signal input by the client-side device. The first conversion unit is further adapted to configure the optical signal input by the client-side device into the first port as a fourth optical signal. The first conversion unit is further configured to send the fourth optical signal to the first blocking unit. The first blocking unit is configured to send the fourth optical signal to the wavelength detection module 1030.

The first conversion unit is further configured to: when the wavelength detection module 1030 detects the fourth optical signal, configure the fourth optical signal as the optical signal input by the client-side device into the first port. The first conversion unit is further configured to send, to the first blocking unit, the optical signal input by the client-side device into the first port. The first blocking unit is further configured to: when the wavelength detection module 1030 detects the fourth optical signal, receive, by using the first conversion unit, the optical signal input by the client-side device into the first port. The first blocking unit is further configured to determine whether the first wavelength set includes the wavelength of the optical signal input by the client-side device into the first port.

The first conversion unit is a wavelength conversion unit that is in the N wavelength conversion units and that is connected to the first port, and the first blocking unit is an optical blocking unit that is in the N optical blocking units and that is connected to the first conversion unit. The fourth optical signal is an optical signal with a preset wavelength.

For example, the first conversion unit is first configured to send the fourth optical signal by default. Optionally, a wavelength of the fourth optical signal is the preset wavelength. The preset wavelength is an out-of-band wavelength, to be specific, a specific wavelength λ₀ outside a signal wavelength range that is used to transmit uplink or downlink service information. An in-band wavelength is a wavelength of a signal that is used to carry service information in an optical communication system. The out-of-band wavelength is relative to the in-band wavelength. The out-of-band wavelength refers to a wavelength that is commonly used for detecting and monitoring an optical signal. λ₀ is a randomly selected specific wavelength in out-of-band wavelengths, that is, a default wavelength enabled by the first conversion unit is configured as λ₀. After the first conversion unit receives, through the first port, the optical signal input by the client-side device, the first conversion unit configures the optical signal input by the client-side device into the first port as the fourth optical signal. In this case, the first blocking unit disables a blocking state of the first port, so that the first conversion unit inputs the fourth optical signal into the wavelength detection module in the wavelength division multiplexing apparatus by using the first blocking unit. In this case, the wavelength detection module sequentially performs detection on the fourth optical signal on each port. Regardless of whether the wavelength detection module detects the wavelength λ₀, the first blocking unit needs to be adjusted to the default blocking state again.

If the wavelength detection module in the wavelength division multiplexing apparatus detects that the fourth optical signal exists on the first port, the wavelength detection module determines that the optical signal input by the client-side device exists on the first port. In this case, the first conversion unit configures the fourth optical signal as the optical signal input by the client-side device into the first port, and sends, to the first blocking unit, the optical signal input by the client-side device into the first port. After receiving, by using the first conversion unit, the optical signal input by the client-side device into the first port, the first blocking unit determines whether the first wavelength set includes the wavelength of the optical signal input by the client-side device into the first port.

If a wavelength that is the same as the wavelength of the optical signal input by the client-side device into the first port does not exist in the first wavelength set, the first blocking unit determines that the optical signal input by the client-side device into the first port does not conflict with the optical signal input by the first device into the multiplexer/demultiplexer module. In this case, the first blocking unit cancels the default blocking state, and transmits, to the optical coupling unit, the optical signal input by the client-side device into the first port. The optical coupling unit couples the first optical signal and an optical signal that is input by the at least one optical blocking unit into the first port for output, to complete a function of uplink scheduling of the optical signal on the client-side device.

If a wavelength that is the same as the wavelength of the optical signal input by the client-side device into the first port exists in the first wavelength set, the first blocking unit determines that the first wavelength set includes the wavelength of the optical signal input by the client-side device into the first port. In other words, the optical signal input by the client-side device into the first port conflicts with an optical signal input by the first device into the multiplexer module. In this case, the first blocking unit maintains the default blocking state, triggers the first conversion unit to change a wavelength, and then performs sending and determining again until the client-side device completes transmission of an optical signal that carries uplink service information.

In this embodiment of this application, the detection unit in the multiplexer module is removed. A size of a waveguide chip is reduced, and difficulty of waveguide fabrication is reduced, so that a size of the entire wavelength division multiplexing apparatus is reduced, to implement miniaturization of the wavelength division multiplexing apparatus.

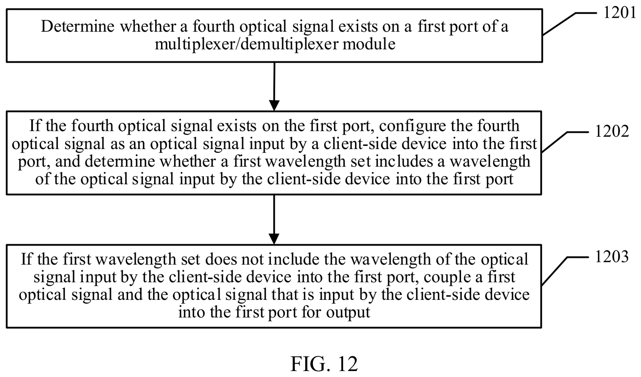

FIG. 12 is a schematic flowchart of a signal transmission method according to an embodiment of this application. As shown in FIG. 12, the signal transmission method provided in this embodiment of this application includes step 1201 to step 1203.

1201: Determine whether a fourth optical signal exists on a first port of a multiplexer/demultiplexer module.

For example, the signal transmission method is applied to the wavelength division multiplexing apparatus shown in FIG. 10 or FIG. 11. The fourth optical signal is an optical signal with a preset wavelength that is specifically a specific wavelength λ₀ in out-of-band of uplink service information transmission.

A first conversion unit in a multiplexer module receives, through the first port, an optical signal input by a client-side device, and configures the optical signal input by the client-side device into the first port as the fourth optical signal. Then, the first conversion unit sends the fourth optical signal to a first blocking unit, and the first blocking unit continues to send the fourth optical signal to a wavelength detection module. After the wavelength detection module detects optical power of the fourth optical signal, the wavelength detection module determines that the fourth optical signal exists on the first port of the multiplexer/demultiplexer module.

1202: If the fourth optical signal exists on the first port, configure the fourth optical signal as the optical signal input by the client-side device into the first port, and determine whether a first wavelength set includes a wavelength of the optical signal input by the client-side device into the first port.

1203: If the first wavelength set does not include the wavelength of the optical signal input by the client-side device into the first port, couple a first optical signal and the optical signal that is input by the client-side device into the first port for output.

If the fourth optical signal exists on the first port, a first conversion unit configures the fourth optical signal as the optical signal input by the client-side device into the first port, and sends, to the first blocking unit, the optical signal input by the client-side device into the first port. In this case, the first blocking unit determines whether the first wavelength set includes the wavelength of the optical signal input by the client-side device into the first port. In other words, the first blocking unit in the multiplexer module compares the optical signal input by the client-side device into the first port with the first wavelength set.

The first wavelength set is a set of all wavelengths included in the first optical signal, the first optical signal is an optical signal input by a first device into the multiplexer/demultiplexer module, the first port is connected to the first conversion unit, and the first conversion unit is connected to the first blocking unit.

If a wavelength that is the same as the wavelength of the optical signal input by the client-side device into the first port does not exist in the first wavelength set, the first blocking unit determines that the first wavelength set does not include the wavelength of the optical signal input by the client-side device into the first port. In other words, the optical signal input by the client-side device into the first port does not conflict with the optical signal input by the first device into the multiplexer module. In this case, the first blocking unit cancels a default blocking state, and transmits, to an optical coupling unit, the optical signal input by the client-side device into the first port. The optical coupling unit couples the first optical signal and an optical signal that is input by the first blocking unit for output, to complete a function of uplink scheduling of the optical signal on the client-side device.

If a wavelength that is the same as the wavelength of the optical signal input by the client-side device into the first port exists in the first wavelength set, the first blocking unit determines that the first wavelength set includes the wavelength of the optical signal input by the client-side device into the first port. In other words, the optical signal input by the client-side device into the first port conflicts with an optical signal input by the first device into the multiplexer module. In this case, the first blocking unit maintains the default blocking state, triggers an OTU corresponding to the first port to change a wavelength, and then performs sending and determining again until the client-side device completes transmission of an optical signal that carries the uplink service information.

It should be understood that, for a specific embodiment of the signal transmission method provided in this embodiment of this application, refer to the corresponding descriptions of the wavelength division multiplexing apparatus shown in FIG. 10 or FIG. 11 in the foregoing embodiment. Details are not described in this embodiment of this application again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a specific working process of the foregoing method embodiments, reference may be made to a corresponding process in the foregoing described system, apparatus, and unit. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A multiplexer module, comprising an optical coupling unit and at least one optical blocking unit, wherein
the optical coupling unit is configured to couple a first optical signal and an optical signal that is input by the at least one optical blocking unit for output, wherein the first optical signal is an optical signal input by a first device into the multiplexer module; and
the at least one optical blocking unit is configured to receive an optical signal input by a client-side device, and when a first wavelength set does not comprise a wavelength of the optical signal input by the client-side device, send, to the optical coupling unit, the optical signal input by the client-side device, wherein the first wavelength set is a set of all wavelengths comprised in the first optical signal.

2. The module according to claim 1, wherein the multiplexer module comprises N ports, each of the N ports is configured to receive the optical signal sent by the client-side device, a quantity of the at least one optical blocking unit is N, each of the N optical blocking units is connected to one of the N ports, and N is a positive integer greater than 0; and the module further comprises:
a detection unit, configured to determine whether the optical signal input by the client-side device exists on a first port in the N ports; and
a first blocking unit, configured to: when the optical signal input by the client-side device exists on the first port, determine whether the first wavelength set comprises the wavelength of the optical signal input by the client-side device into the first port, wherein the first blocking unit is an optical blocking unit that is in the N optical blocking units and that is connected to the first port.

3. The module according to claim 2, wherein the first blocking unit is configured to control the optical signal input by the client-side device to be output to the detection unit through a first path by default, wherein the first path is an optical transmission path between the detection unit and the first port; and
when the first blocking unit determines that the first wavelength set does not comprise the wavelength of the optical signal input by the client-side device into the first port, the first blocking unit is configured to control the optical signal input by the client-side device to be output to the optical coupling unit through a second path, wherein the second path is an optical transmission path between the optical coupling unit and the first port.

4. The module according to claim 2, wherein the module further comprises:
an optical splitting unit, configured to split the optical signal input by the client-side device into the first port into a second optical signal and a third optical signal, send the second optical signal to the detection unit, and send the third optical signal to the first blocking unit; and
the first blocking unit is specifically configured to: when the detection unit detects the second optical signal, determine whether the first wavelength set comprises a wavelength of the third optical signal, and when the first wavelength set does not comprise the wavelength of the third optical signal, send the third optical signal to the optical coupling unit.

5. The module according to any one of claims 1 to 4, wherein the at least one optical blocking unit is further configured to: when the first wavelength set comprises the wavelength of the optical signal input by the client-side device, block the optical signal input by the client-side device.

6. The module according to any one of claims 1 to 5, wherein the at least one optical blocking unit is a Mach-Zehnder interferometer MZI-type variable optical attenuator VOA or a micro-electro-mechanical system-type variable optical attenuator MEMS-VOA.

7. A multiplexer/demultiplexer module, comprising an optical splitting module and the multiplexer module according to any one of claims 1 to 6, wherein the optical splitting module is configured to split the optical signal input by the first device to obtain the first optical signal, and send the first optical signal to the optical coupling unit in the multiplexer module.

8. A wavelength division multiplexing apparatus, comprising the multiplexer/demultiplexer module according to claim 7.

9. A wavelength division multiplexing apparatus, comprising a multiplexer/demultiplexer module and a wavelength conversion module, wherein the multiplexer/demultiplexer module comprises an optical coupling unit and at least one optical blocking unit, wherein
the optical coupling unit is configured to couple a first optical signal and an optical signal that is input by the at least one optical blocking unit for output, wherein the first optical signal is an optical signal input by a first device into the multiplexer/demultiplexer module; and
the at least one optical blocking unit is configured to receive, by using the wavelength conversion module, an optical signal input by a client-side device, and when a first wavelength set does not comprise a wavelength of the optical signal input by the client-side device, send, to the optical coupling unit, the optical signal input by the client-side device, wherein the first wavelength set is a set of all wavelengths comprised in the first optical signal.

10. The apparatus according to claim 9, wherein the multiplexer/demultiplexer module comprises N ports, the wavelength conversion module comprises N wavelength conversion units, a quantity of the at least one optical blocking unit is N, each of the N optical blocking units is connected to one of the N wavelength conversion units, each of the N wavelength conversion units is connected to one of the N ports, and N is a positive integer greater than 0, wherein the apparatus further comprises a wavelength detection module;
a first conversion unit is configured to receive, through a first port in the N ports, the optical signal input by the client-side device, wherein the first conversion unit is a wavelength conversion unit that is in the N wavelength conversion units and that is connected to the first port;
the first conversion unit is further adapted to configure the optical signal input by the client-side device into the first port as a fourth optical signal, and send the fourth optical signal to a first blocking unit, wherein the fourth optical signal is an optical signal with a preset wavelength, and the first blocking unit is an optical blocking unit that is in the N optical blocking units and that is connected to the first conversion unit;
the first blocking unit is configured to send the fourth optical signal to the wavelength detection module; and
the first blocking unit is further configured to: when the wavelength detection module detects the fourth optical signal, receive, by using the first conversion unit, the optical signal input by the client-side device into the first port, and determine whether the first wavelength set comprises the wavelength of the optical signal input by the client-side device into the first port.

11. The apparatus according to claim 10, wherein the first conversion unit is further configured to: when the wavelength detection module detects the fourth optical signal, configure the fourth optical signal as the optical signal input by the client-side device into the first port, and send, to the first blocking unit, the optical signal input by the client-side device into the first port.

12. The apparatus according to any one of claims 9 to 11, wherein the at least one optical blocking unit is further configured to: when the first wavelength set comprises the wavelength of the optical signal input by the client-side device, block the optical signal input by the client-side device.

13. The apparatus according to any one of claims 9 to 12, wherein the at least one optical blocking unit is a Mach-Zehnder interferometer MZI-type variable optical attenuator VOA or a micro-electro-mechanical system-type variable optical attenuator MEMS-VOA.

14. A signal transmission method, comprising:
determining whether an optical signal input by a client-side device into a first port exists on the first port of a multiplexer module;
if the optical signal input by the client-side device into the first port exists on the first port, determining whether a first wavelength set comprises a wavelength of the optical signal input by the client-side device into the first port, wherein the first wavelength set is a set of all wavelengths comprised in a first optical signal, and the first optical signal is an optical signal input by a first device into the multiplexer module; and
if the first wavelength set does not comprise the wavelength of the optical signal input by the client-side device into the first port, coupling the first optical signal and the optical signal that is input by the client-side device into the first port for output.

15. A signal transmission method, comprising:
determining whether a fourth optical signal exists on a first port of a multiplexer/demultiplexer module, wherein the fourth optical signal is an optical signal with a preset wavelength;
if the fourth optical signal exists on the first port, configuring the fourth optical signal as an optical signal input by a client-side device into the first port, and determining whether a first wavelength set comprises a wavelength of the optical signal input by the client-side device into the first port, wherein the first wavelength set is a set of all wavelengths comprised in a first optical signal, and the first optical signal is an optical signal input by a first device into the multiplexer/demultiplexer module; and
if the first wavelength set does not comprise the wavelength of the optical signal input by the client-side device into the first port, coupling the first optical signal and the optical signal that is input by the client-side device into the first port for output.
